# EUROPEAN PATENT APPLICATION

(11) **EP 1 712 983 A2**
(43) Date of publication of application: **18.10.2006**
(21) Application number: 06112539.9
(22) Date of filing: 12.04.2006
(51) Int. Cl.: G06F 3/048

(54) **User interface in which plurality of related pieces of menu information belonging to distict categories are displayed in parallel, and apparatus and method for displying the user interface**

(30) Priority: 15.04.2005 KR 20050031620
(71) Applicant: Samsung Electronics Co., Ltd., Suwon-si 442-742 Gyeonggi-Do (KR)
(72) Inventor: Lee, Jung-won, Seongnam-si Gyeonggi-do (KR)
(74) Representative: Robinson, Ian Michael

(57) **Abstract**

A user interface in which a plurality of pieces of related menu information belonging to distinct categories are displayed in parallel, and an apparatus and method for displaying the user interface are provided. The apparatus includes an interface storage unit (940) which stores information regarding a plurality of menu icons belonging to a plurality of categories, a display unit (920) which displays the menu icons in a plurality of regions, an input reception unit (910) which receives one of a directional input signal or a selection input signal from a user, and a control unit (930) which changes the menu icons displayed by the display unit (920) or moves the selector (701) in response to the input signal received by the input reception unit (910) by referencing the information stored in the interface storage unit (940).

## Description

The present invention relates to a user interface in which a plurality of related pieces of menu information belonging to distinct categories are displayed in parallel, and a method and apparatus for displaying the user interface.

A home network generally includes a variety of multimedia devices connected to one another. Thus, to easily use the devices, network functions and features are important. For example, a variety of contents can be stored in the respective multimedia devices. For content play, it is necessary to select a device from which the content is to be played. A particular content to be played is then selected from the selected device by using a wide variety of pieces of information provided by the selected device. Thus, efficiently classifying and presenting a variety of different multimedia information elements has become an important issue in the user interface design area.

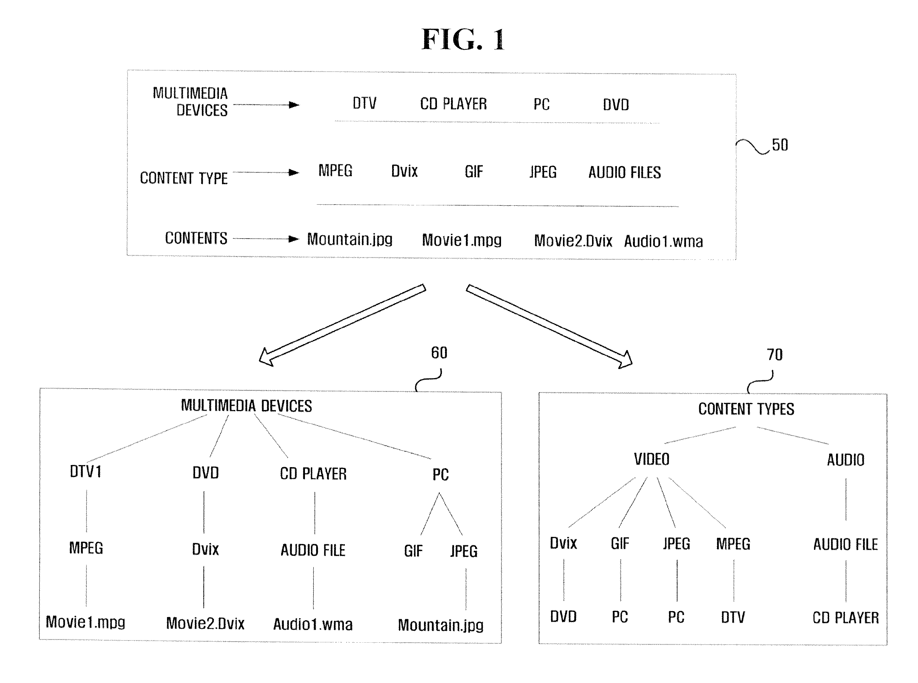

The information that can be provided or used through multimedia devices is classified in various ways, for example, according to kinds of devices or contents. In addition, several pieces of information of the contents can be used. In order to present, select, and modify such a variety of pieces of information on a display screen, an efficient display is necessary. The information pieces that can be provided or used through multimedia devices may have a hierarchical or planar arrangement. Examples of classifying hierarchically-displayed information include roughly classifying a particular piece of information based on a predetermined standard and further classifying other pieces of information using the already classified piece of information. Figure 1 is a diagram illustrating how a plurality of pieces of multimedia information belonging to distinct categories are organized.

Referring to Figure 1, a hierarchy 50 indicates a planar arrangement of a plurality of pieces of multimedia information, including a plurality of pieces of multimedia device type information regarding a DTV, a DVD player, a PC, and a CD player, a plurality of pieces of content type information regarding MPEG files, Dvix files, GIF files, JPEG files, and audio files, and a plurality of pieces of content information regarding Movie1.mpg, Mountain.jpg, Movie2.Dvix, and Audio1. wma. The plurality of pieces of multimedia device type information, the plurality of pieces of content type information, and the plurality of pieces of content information can be displayed in a hierarchy 60 or 70. In detail, in the hierarchy 60, a plurality of pieces of content can be classified into a DTV1 group, a DVD group, a CD player group, and a PC group according to the types of multimedia devices that can play them, and then, the plurality of contents belonging to each of the DTV1 group, the DVD group, the CD player group, and the PC group can be further classified according to the file format of content provided by a corresponding multimedia device. Alternatively, in the hierarchy 70, a plurality of multimedia devices can be classified into a video group and an audio group according to whether they are for playing video content or solely for playing audio content, the multimedia devices belonging to each of the video group and the audio group can be further classified into a plurality of classes according to the file formats that they support, and the multimedia devices belonging to each of the classes can be further classified according to their types.

A plurality of pieces of information regarding multimedia devices and contents can be classified in various manners as illustrated in Figure 1. Therefore, if multimedia data is presented according to a simple hierarchy, users may have difficulty in selecting multimedia data of interest.

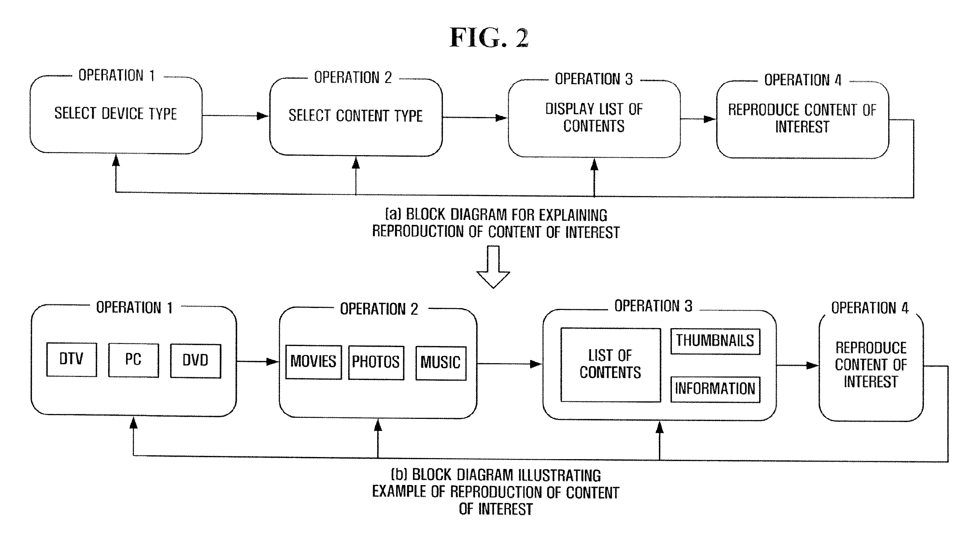

Figure 2 is a diagram for explaining a conventional method of selecting content from a variety of multimedia devices constituting a home network and playing the selected content. Specifically, portion (a) of Figure 2 is a block diagram for explaining a conventional method of playing content in a home network.

Referring to portion (a) of Figure 2, in operation 1, a user selects one of a plurality of multimedia devices using an external input device, such as remote control. In operation 2, the user selects a content type. In operation 3, the user selects one of a plurality of contents displayed in a content list corresponding to the content type selected in operation 2. In operation 4, the user reproduces the content selected in operation 3 using the multimedia device selected in operation 1. In short, the user selects a multimedia device on which to play the content of interest, selects the content type, and then selects one of a plurality of contents corresponding to the content type. Portion (b) of Figure 2 illustrates each of the operations of the conventional method illustrated in portion (a) of Figure 2 in detail.

Referring to portion (b) of Figure 2, a plurality of multimedia devices, such as a DTV, a PC, and a DVD player, are connected to a home network. In operation 1, one of the multimedia devices is selected. In operation 2, a content type is selected from a plurality of content types provided by the multimedia device selected in operation 1, such as 'Movies', 'Photos', and 'Music'. In operation 3, information regarding a plurality of contents that are stored in the multimedia device selected in operation 1 and belong to the content type selected in operation 2 is displayed. For example, if a PC is selected in operation 1 and the content type 'Movies' is selected in operation 2, a list of movie titles stored in the PC may be displayed in operation 3. Then, a user can select one of the movie titles from the movie titles list displayed in operation 3 and can reproduce the selected movie content. The user can return to previous operations, if any, at any time. For example, the user can return from operation 3 to operation 2 or from operation 2 to operation 1.

Conventionally, content of interest is selected and then played through a plurality of menu selection processes, e.g., at least 3 menu selection processes, as illustrated in Figure 2. If there are a considerable number of multimedia devices and a considerable number of content types, a user interface may need to separately display multimedia contents classifications according to the types of multimedia devices and the content types. However, if a user must too frequently intervene in the selection and reproduction of content as in the conventional method of Figure 2, the efficiency of use of multimedia devices and contents may considerably decrease. This inefficiency associated with too many menu selection processes and screen changes may also affect various multimedia-related operations other than reproduction of content. Therefore, it is necessary to provide an efficient user interface which can enable a multimedia-related operation requiring a considerable number of menu selection processes to be effectively carried out by minimizing a required number of user input processes and a required number of screen changes.

According to the present invention there is provided an apparatus and method as set forth in the appended claims. Preferred features of the invention will be apparent from the dependent claims, and the description which follows.

An aspect of the present invention provides a user interface in which a plurality of related pieces of menu information belonging to distinct categories are displayed in parallel, and a method and apparatus for displaying the user interface, in which content of interest can be easily searched for and played in a home network requiring a considerable number of menu selection processes.

The present invention may also provide a user interface in which a plurality of related pieces of menu information belonging to distinct categories are displayed in parallel, and a method and apparatus for displaying the user interface in which a required number of user input processes for menu selection can be reduced by providing a plurality of related pieces of menu information.

The above aspects as well as other aspects, features and advantages, of the present invention will become clear to those skilled in the art upon reviewing the following description.

According to an aspect of the present invention, there is provided an apparatus for displaying a user interface in which a plurality of related pieces of menu information belonging to distinct categories are displayed in parallel, the apparatus including an interface storage unit which stores information regarding a plurality of first menu icons belonging to a first category, information regarding a plurality of second menu icons belonging to a second category, information regarding a plurality of third menu icons belonging to a third category, and information regarding one of the first, second, and third menu icons selected by a selector, a display unit which displays the first menu icons in a first menu region, displays the second menu icons in a second menu region, and displays the third menu icons that belong to the first and second categories commonly in a third menu region, the first, second, and third menu regions being displayed in parallel, an input reception unit which receives one of a directional input signal or a selection input signal from a user, and a control unit which changes the first, second, and third menu icons displayed by the display unit or moves the selector in response to the input signal received by the input reception unit by referencing the information stored in the interface storage unit.

According to another aspect of the present invention, there is provided a method of displaying a user interface in which a plurality of related pieces of menu information belonging to distinct categories are displayed in parallel, the method including receiving an activation input signal for requesting a menu screen, displaying a plurality of first menu icons belonging to a first category in a first menu region and displaying a plurality of second menu icons belonging to a second category in a second menu region, displaying a plurality of third menu icons belonging to a third category in a third menu region, the third menu icons selected from a menu icon selected from a first menu region and a menu icon selected from a second menu region have in common, displaying a selector in the first, second, and third menu regions, and receiving an input signal and moving the first or second menu icons or the selector in response to the input signal so that the selector can flip through the first or second menu icons.

According to still another aspect of the present invention, there is provided a user interface for arranging a plurality of related pieces of menu information belonging to distinct categories in parallel, the user interface including a first menu region in which first menu icons belonging to a first category is displayed, a second menu region in which information regarding second menu icons belonging to a second category is displayed, a third menu region in which information regarding a plurality of third menu icons belonging to a third category which belonging to the first and second category commonly, and is displayed in parallel with the first and second menu regions, and a selector located in selected menu region, one of the first, second, and third menu regions.

The above and other features and aspects of the present invention will become more apparent by describing in detail exemplary embodiments thereof with reference to the attached drawings in which:
Figure 1 is a diagram for explaining how a plurality of pieces of multimedia information belonging to distinct categories are organized;
Figure 2 is a diagram for explaining a conventional method of selecting and playing multimedia content in a home network constituted by a plurality of multimedia devices;
Figure 3 is a diagram of a user interface for selecting multimedia content provided by a multimedia device according to an exemplary embodiment of the present invention;
Figure 4 is a diagram of a user interface for selecting multimedia content provided by a multimedia device according to another exemplary embodiment of the present invention;
Figure 5 is a diagram for explaining a method of selecting multimedia content provided by a multimedia device using a jog shuttle according to an exemplary embodiment of the present invention;
Figure 6 is a diagram illustrating switching of menu screens when a selector is moved from one menu icon to another menu icon in a first menu region according to an exemplary embodiment of the present invention;
Figure 7 is a diagram illustrating a menu screen obtained when a user moves a selector from one menu region to another menu region according to an exemplary embodiment of the present invention;
Figure 8 is a diagram illustrating a menu screen obtained when the user moves the selector from one menu icon to another menu icon in a third menu region according to an exemplary embodiment of the present invention;
Figure 9 is a diagram illustrating a menu screen obtained when the user activates a toolbox for selecting a content arrangement method when the selector is located in the third menu region according to an exemplary embodiment of the present invention;
Figure 10 is a diagram illustrating a menu screen obtained when the user moves the selector from the third region to a second region according to an exemplary embodiment of the present invention;
Figure 11 is a block diagram for comparing a method of selecting and playing multimedia content provided by a multimedia device according to an exemplary embodiment of the present invention with a conventional method of selecting and playing multimedia content provided by a multimedia device;
Figure 12 is a diagram of a user interface according to an exemplary embodiment of the present invention, in which first through third menu regions are displayed in parallel in a transverse direction;
Figure 13 is a diagram of a user interface according to another exemplary embodiment of the present invention, in which first through third menu regions are displayed in parallel in a longitudinal direction;
Figure 14 is a diagram illustrating sub-menu regions expanded from the user interface of Figure 3 according to an exemplary embodiment of the present invention;
Figure 15 is a diagram illustrating sub-menu regions expanded from the user interface of Figure 4 according to an exemplary embodiment of the present invention;
Figure 16 is a flowchart of a method of displaying a user interface according to an exemplary embodiment of the present invention; and
Figure 17 is a block diagram of an apparatus for displaying a user interface according to an exemplary embodiment of the present invention.

Various aspects and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of the invention are shown.

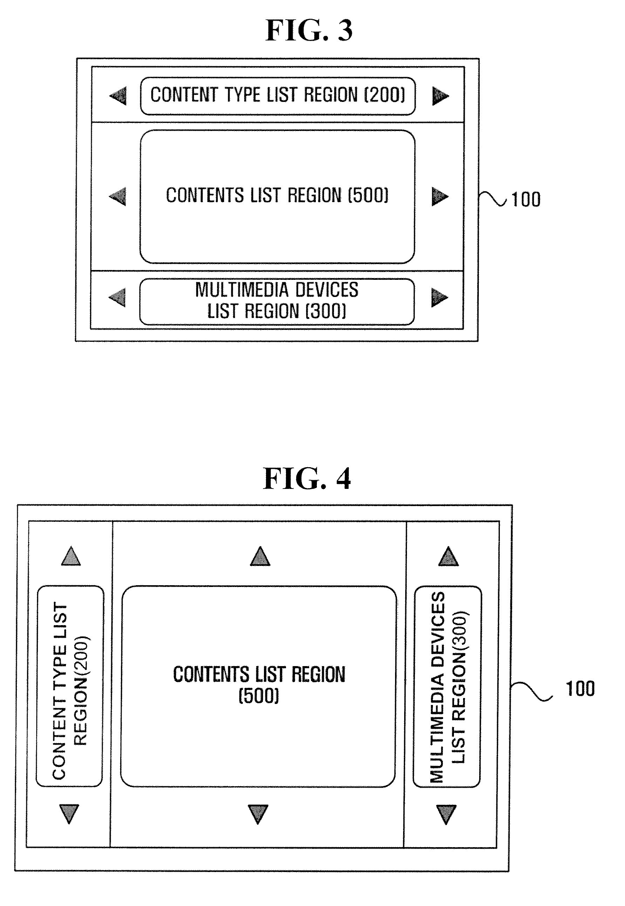

Figure 3 is a diagram of a user interface for selecting multimedia content provided by a multimedia device according to an exemplary embodiment of the present invention. A plurality of pieces of multimedia information belonging to one of the 3 categories of Figure 1, i.e., a content type category, a content category, and a multimedia device category, are provided. A menu screen 100 may be displayed on an entire screen or on part of the screen. The menu screen 100 is divided into 3 menu regions, i.e., first, second, and third menu regions. For convenience of explanation, the first, second, and third menu regions are also called, for example, a content type list region 200, a contents list region 500, and a multimedia devices list region 300, respectively, in consideration of the categories of a plurality of sets of menu icons that they respectively include. A plurality of menu icons indicating a plurality of content types, i.e., 'Movies', 'Photos', and 'Music', are displayed in the content type list region 200. A plurality of menu icons indicating a plurality of currently available multimedia devices, i.e., 'DTV1', 'DTV2', 'PC', and 'DVD', are displayed in the multimedia devices list region 300. The content type list region 200 or the multimedia devices list region 300 may display only one menu icon or more than one menu icon at a time. Therefore, it is necessary to indicate which of the menu icons displayed in the content type list region 200 or the multimedia devices list region 300 is selected. One method of indicating which of the menu icons displayed in the content type list region 200 or the multimedia devices list region 300 involves using a selector. In such a method, the selector is moved from one menu icon to another in a menu region or from one menu region to another and a plurality of pieces of information corresponding to a menu icon or a menu region selected by the selector are displayed. In an embodiment, the menu icons included in the content type list region 200 or the multimedia devices list region 300 are displayed in parallel in a transverse direction.

A plurality of pieces of content information that a menu icon selected from the content type list region 200 and a menu icon selected from the multimedia devices list region 300 have in common are displayed in the contents list region 500. The content information displayed in the contents list region 500 includes a list of contents that can be played by and is stored in a multimedia device corresponding to the menu icon selected from the multimedia devices list region 300 and that belong to content type corresponding to the menu icon selected from the content type list region 200.

For example, if the menu icon 'DTV1' and the menu icon 'Movies' are selected from the multimedia devices list region 300 and the content type list region 200, respectively, a plurality of movie titles that can be played by a first DTV may be listed in the contents list region 500 or only the movie title that has been most recently played may be displayed in the contents list region 500.

Alternatively, if the menu icon 'DVD' and the menu icon 'Movies' are selected from the multimedia devices list region 300 and the content type list region 200, respectively, a plurality of movie titles that can be played by a DVD player may be listed in the contents list region 500 or only the movie title that has been most recently played may be displayed in the contents list region 500. If a plurality of DVDs are currently loaded in the DVD player, a plurality of movie titles contained in the DVD that has been most recently played by or loaded in the DVD player may be displayed in the contents list region 500. A selector (not shown) may be moved from one menu icon to another displayed in a menu region using, for example, left and right keys, and may be moved from one menu region to another using, for example, up and down keys. The movement of the selector from one menu icon to another in a menu region or from one menu region to another menu region will be described later in detail.

Figure 4 is a diagram of a user interface for selecting multimedia content provided by a multimedia device according to another exemplary embodiment of the present invention. The user interface shown in Figure 4 is similar to that shown in Figure 3 except for various regions being displayed in parallel in a longitudinal direction. Thus, a selector (not shown) may be moved from one menu region to another menu region using left and right keys, instead of using up and down keys as illustrated in Figure 3.

The movement of the selector of Figure 3 or Figure 4 and the displaying of various information according to the movement of the selector, may be carried out using various data input methods or devices. In a typical home network, data can be input through remote control. Thus, the selector can be moved using, for example, directional keys, a jog shuttle, or joystick provided to a remote controller.

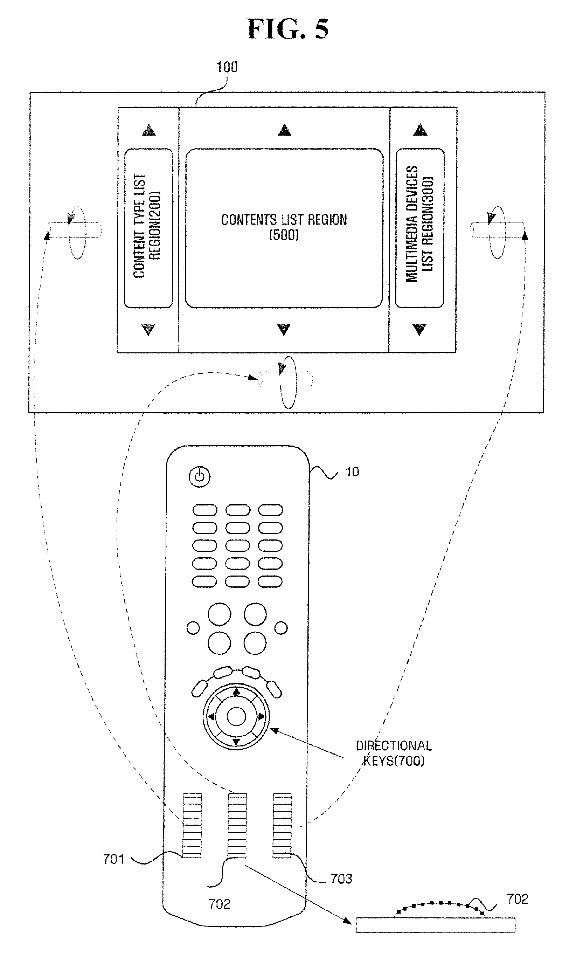

Figure 5 is a diagram for explaining a method of selecting multimedia content provided by a multimedia device using a jog shuttle according to an exemplary embodiment of the present invention. Like in Figure 4, a content type list region 200, a contents list region 500, and a multimedia devices list region 300 are displayed in parallel in a longitudinal direction. Therefore, a selector is moved from one menu icon to another displayed in each of the content type list region 200, the contents list region 500, and the multimedia devices list region 300 using up and down keys. However, if there are a considerable number of pieces of menu icons to be displayed in each of the content type list region 200, the contents list region 500, and the multimedia devices list region 300, a data input method using a jog shuttle may be more efficient than a data input method using directional keys in terms of quickly displaying a plurality of menu icons according to the movement of the selector and selecting one of the menu icons. A remote controller 10 includes directional keys 700 for moving the selector horizontally or vertically and a plurality of jog shuttles 701, 702, and 703. The jog shuttles 701, 702, and 703 are used for looking over the menu icons displayed in the content type list region 200, the contents list region 500, and the multimedia devices list region 300, respectively. A user can sequentially or simultaneously flip through the menu icons displayed in the content type list region 200, the contents list region 500, and the multimedia devices list region 300 using the jog shuttles 701, 702, and 703. The remote controller 10 may be designed to include only one jog shuttle and directional keys, thereby reducing the size of the remote controller 10. A plurality of selectors may be provided according to the types and number of jog shuttles provided to the remote controller 10, in which case, the selectors are moved in response to signals input via the respective jog shuttles.

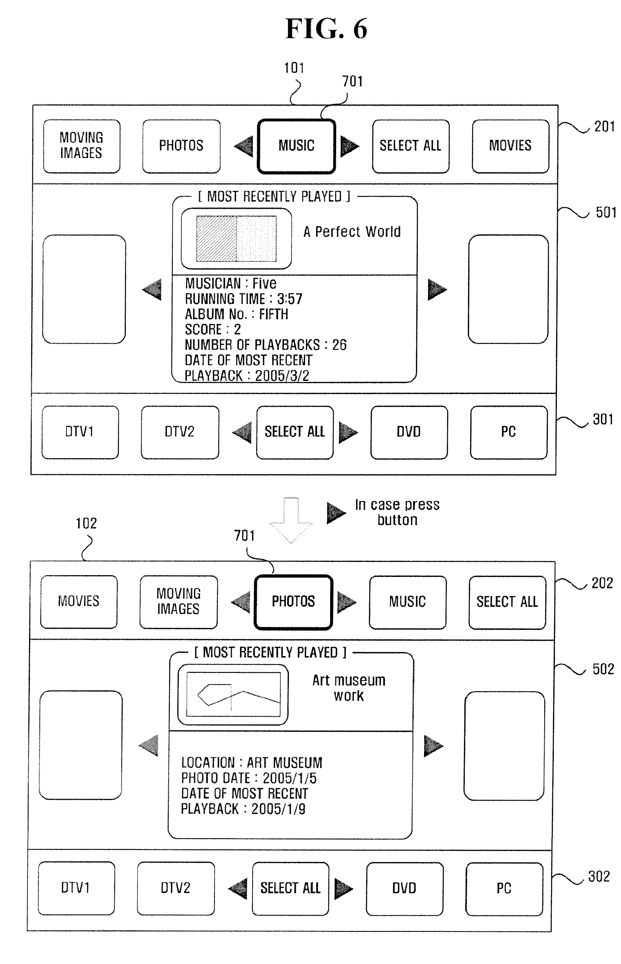

Figure 6 is a diagram illustrating the switching of menu screens when a selector is moved from one menu icon to another in a first menu region according to an exemplary embodiment of the present invention.

A menu screen 101 is divided into a first menu region 201, a second menu region 301, and a third menu region 501. A plurality of menu icons 'Moving Images', 'Photos', 'Music', 'Select All', and 'Movies' are displayed in the first menu region 201. A selector 701 is located at the menu icon 'music' in the first menu region 201. A plurality of menu icons 'DTV1' `DTV2', 'Select All', 'DVD', and 'PC' are displayed in the second menu region 301. In the second region 301, the menu icon 'Select All' is highlighted. A plurality of pieces of content information that a menu icon selected from the first menu region 201 and a menu icon selected from the second menu region 301 have in common are displayed in the third menu region 501. For example, a plurality of pieces of content information regarding a plurality of music files that can be played by or are stored in all of a plurality of multimedia devices listed in the third menu region 501 may be displayed in the third menu region 501 in the reverse order to which the music files have been played. If a user hits a directional key, e.g., a right key, of an input device, such as a remote controller, on the menu screen 101, a menu screen 102 may be displayed. In detail, when the user hits the right key of the input device on the menu screen 101, all of the menu icons 'Moving Images', 'Photos', 'Music' , 'Select All', and 'Movies' displayed in the first menu region 201 are moved to the right so that the menu icon 'Photos' can be highlighted on the menu screen 102 by the selector 701. In this case, the menu icon 'music', which was previously highlighted on the menu screen 101 by the selector 701, is located on the right side of the selector 701 on the menu screen 102 and is thus not highlighted, and the menu icon 'movies', which was previously located on the far right of the first menu region 201, is located on the far left of a first menu region 202 on the menu screen 102. Therefore, when the user hits the right key of the input device when the menu icons 'Moving Images', 'Photos'. 'Music'. 'Select All', and 'Movies' in the first menu region 201 is highlighted, the menu icons 'Moving Images', 'Photos'. 'Music', 'Select All', and 'Movies' are moved to the right, thereby offering a visual effect of moving and rotating the far right side menu item in the reverse direction while moving all the selected menu items in the right direction.

Meanwhile, a third menu region 501 on the menu screen 101 displays a plurality of pieces of content information that a menu icon selected from the first menu region 201 and a menu icon selected from a second menu region 301 have in common. Therefore, as the first menu region 201 is changed to the second menu region 202 by user's hitting the right key on the menu screen 101, a third menu region 502 changes accordingly. Since the menu icon 'Photos' in the first menu region 202 is currently highlighted by the selector 701 and the menu icon 'Select All' in the second menu region 302 is highlighted, a plurality of photos that can be displayed by all of the multimedia devices may be displayed in the third menu region 501 in the reverse order to which the photos have been played.

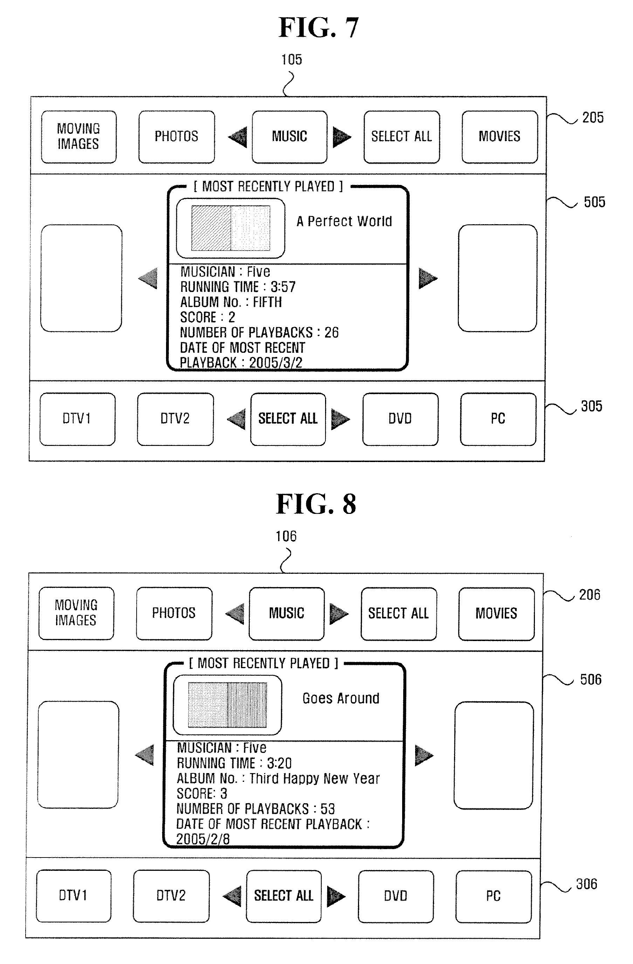

Figure 7 is a diagram illustrating a menu screen obtained when a user moves a selector from one menu region to another according to an exemplary embodiment of the present invention. A menu screen 105 is obtained when the user hits a down key of an input device on the menu screen 101 of Figure 6. In detail, when the user hits the down key when the selector 701 is located in the first menu region 201 as illustrated in Figure 6, the selector 701 is moved from a first menu region 205 to a third menu region 505 so that one of a plurality of pieces of content information displayed in the third menu region 505 can be highlighted by the selector 701.

Figure 8 is a diagram illustrating a menu screen obtained when the user moves the selector from one menu icon to another menu icon in a third menu region according to an exemplary embodiment of the present invention. A menu screen 106 is obtained when the user hits a left or right key of an input device on the menu screen 105 of Figure 7. In detail, when the user hits the left or right key of the input device when the selector 701 is located in the third menu region 505 as illustrated in Figure 7, a piece of content information other than the piece of content information highlighted in the third menu region 505 is highlighted in a third menu region 506 by the selector 701. If the piece of content information highlighted in the third menu region 505 by the selector 701 is associated with the content that has been most recently displayed, a piece of content information associated with the content that has been second most recently played may be highlighted in the third menu region 506 by the selector 701 when the user hits the right key of the input device on the screen 105.

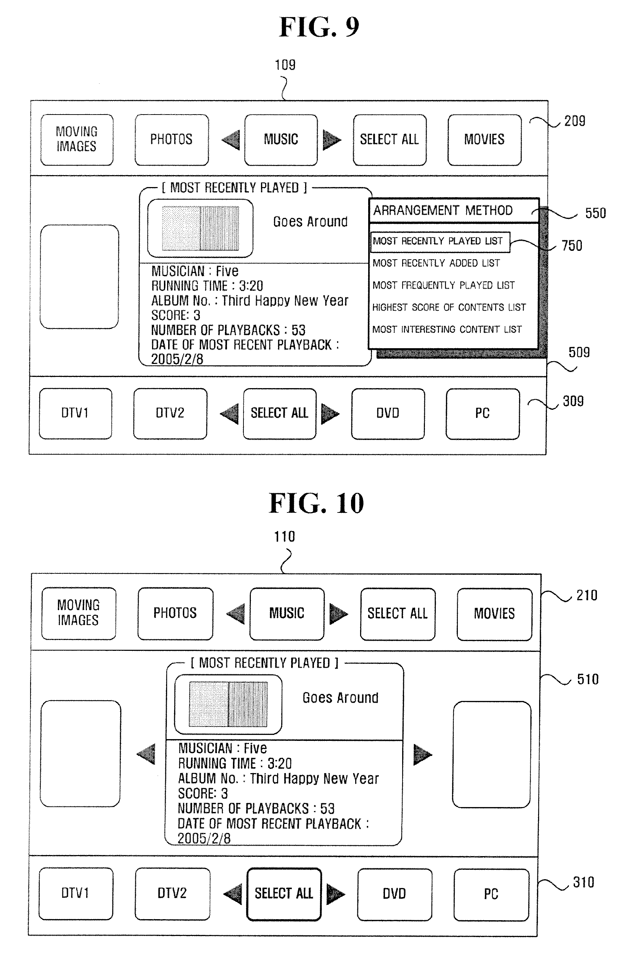

Figure 9 is a diagram illustrating a menu screen obtained when the user activates a toolbox for selecting a content arrangement method when the selector is located in the third menu region, according to an exemplary embodiment of the present invention. A plurality of pieces of content information may be displayed in a third menu region 509 in various orders. For this, a toolbox 550 may be provided so that the user can freely determine in what order the plurality of pieces of content information are to be displayed in the third menu region 509. If the user hits a tool button on the screen 106 of Figure 8, the toolbox 550 may pop up on a menu screen 109, as shown in Figure 9. The toolbox 550 includes a plurality of menu icons specifying respective corresponding arrangement methods. Thus, the user can select one of the menu icons in the toolbox 550 using up and down keys. The toolbox 550 also includes a movable selector 750 which is moved along a vertical direction according to a key input provided by the user. Alternatively, a plurality of pieces of information for display type may be entirely moved. For example, a visually rotating effect of information may be offered in a state in which a selector is fixed in one of the first, second and third regions, displayed. Thereafter, if the user hits the tool button or another selection button, the plurality of pieces of content information displayed in the third menu region 550 may be rearranged. The toolbox 550 may also allow the user to select whether to display the plurality of pieces of content information as thumbnails in the third menu region 550 or in the entire third menu region 550.

Figure 10 is a diagram illustrating a menu screen obtained when the user moves the selector from the third region to a second region according to an exemplary embodiment of the present invention. A menu screen 110 is obtained when the user hits a down button of an input device on the menu screen 106 of Figure 8. In detail, when the user hits the down button of the input device when the selector 701 is located in the third menu region 506 as illustrated in Figure 8, the selector 701 is moved down from the third menu region 506. Accordingly, the selector 701 is located in a second menu region 310 as illustrated in Figure 10. Then, the user can select one of a plurality of menu icons 'DTV1', 'DTV2', 'Select All', 'DVD', and 'PC' displayed in the second menu region 310. When the user hits a right or left key of the input device when the selector 701 is located in the second menu region 310, the menu icons 'DTV1', `DTV2', 'Select All', `DVD', and 'PC' are moved to the right or to the left, as if they are rotated, and content information highlighted in a third menu region 510 changes. Thereafter, if the user hits an up key of the input device when the selector 701 is located in the third menu region 310, the selector 701 is moved from the second menu region 310 to the third menu region 510. If the user hits the down key of the input device when the selector 701 is located in the second menu region 310, the selector 701 is moved to a first menu region 210 since no menu region exists under the second menu region 310.

According to an exemplary embodiment of the present invention, a plurality of menu icons or a plurality of pieces of content information included in the menu screen are displayed in parallel in a horizontal direction as illustrated in Figures 6 through 10. However, the menu icons or the plurality of pieces of content information included in the menu screen according to an exemplary embodiment of the present invention may be displayed in parallel in a vertical direction, as illustrated in Figure 4. In this case, the user can move the selector 701 from one menu icon to another menu icon in a menu region or from one piece of content information to another using up and down keys of an input device and can move the selector 701 from one menu region to another using left and right keys of the input device. Alternatively, the user may move the selector 701 from one menu icon to another menu icon in a menu region or from one piece of content information to another using one or more jog shuttles, as illustrated in Figure 5. In this case, the rotation speed of the jog shuttles affects the speed of the selector 701 that is being moved from one menu icon to another menu icon or from one piece of content information to another piece of content information.

In Figures 3 through 10, the selector 701 is fixed, and a plurality of menu icons or a plurality of pieces of content information provided in each menu region are moved to the left or to the right according to a key input provided by a user, as if they are rotated. However, the selector 701 may be actually moved between a plurality of menu icons or a plurality of pieces of content information provided in each menu region according to a key input provided by a user.

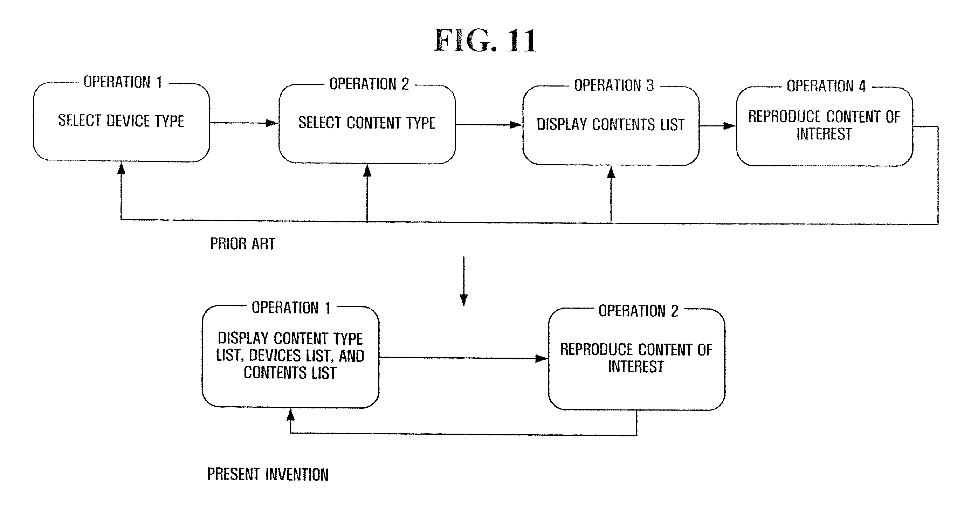

Figure 11 is a diagram for comparing a method of selecting and playing multimedia content provided by a multimedia device according to an exemplary embodiment of the present invention with a conventional method of selecting and playing multimedia content provided by a multimedia device. Referring to Figure 11, in the prior art, the multimedia device type is selected, the content type is selected, and one of a plurality of contents that can be played by a multimedia device corresponding to the selected multimedia device type and correspond to the selected content type is selected and then played.

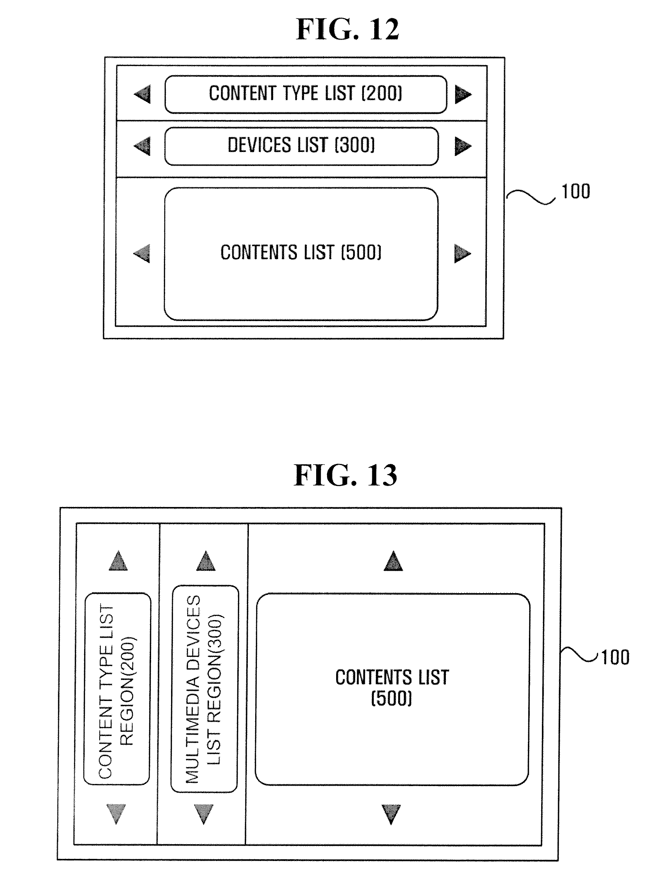

The menu screen according to an exemplary embodiment of the present invention is illustrated in Figures 3 through 10 and consists of a first menu region, a second menu region, and a third menu region interposed between the first and second menu regions. However, the menu screen according to an exemplary embodiment of the present invention may consist of a first menu screen, a third menu screen, and a second menu screen interposed between the first and third menu screens, as illustrated in Figures 12 and 13.

Figure 12 is a diagram of a user interface according to an exemplary embodiment of the present invention, in which first through third menu regions are displayed in parallel in a transverse direction. A menu screen 100 is divided into first, second, and third menu regions. The first, second, and third menu regions correspond to a content type list region 200, a multimedia devices list region 300, and a contents list region 500, respectively. Therefore, a user can select one of a plurality of menu icons displayed in the first menu region using left and right keys of an input device, move a selector from the first menu region to a second menu region using a down key of the input device, and select one of a plurality of menu icons displayed in the second menu region using the left and right keys of the input device. In this case, a plurality of pieces of content information are displayed in the third menu region according to which of the menu icons in the first or second menu region are selected by the user. Thereafter, the user can flip through the plurality of pieces of content information displayed in the third menu region using the left and right keys of the input device.

Figure 13 is a diagram of a user interface according to another exemplary embodiment of the present invention, in which first through third menu regions are displayed in parallel in a longitudinal direction. A menu screen 100 is divided into first, second, and third menu regions. The first, second, and third menu regions correspond to a content type list region 200, a multimedia devices list region 300, and a contents list region 500, respectively. Therefore, a user can select one of a plurality of menu icons displayed in the first menu region using up and down keys of an input device, move a selector from the first menu region to a second menu region using a right key of the input device, and select one of a plurality of menu icons displayed in the second menu region using the up and down keys of the input device. In this case, a plurality of pieces of content information are displayed in the third menu region according to which of the menu icons in the first or second menu region are selected by the user. Thereafter, the user can flip through the plurality of pieces of content information displayed in the third menu region using the up and down keys of the input device. The user can use a jog shuttle when flipping through the plurality of pieces of content information displayed in the third menu region, as illustrated in Figure 5.

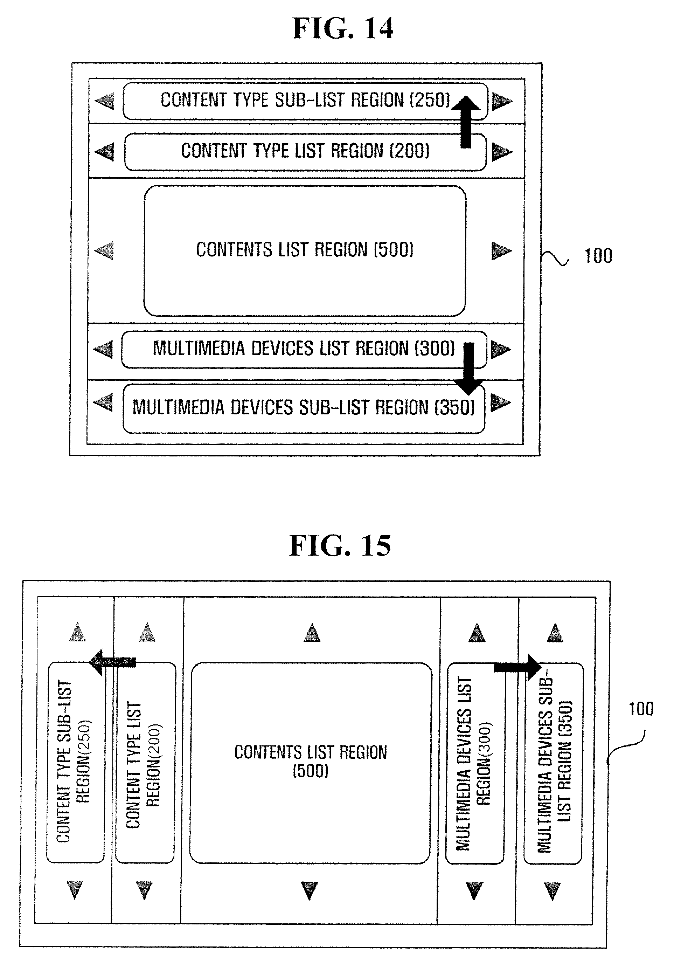

Figure 14 is a diagram illustrating sub-menu regions expanded from the menu screen 100 of Figure 3. Referring to Figure 14, if a user selects the content type list region 200 or the multimedia devices list region 300, a sub-menu region, if any, may be expanded from the content type list region 200 or the multimedia devices list region 300. In detail, if the user selects the content type list region 200, a content type sub-list region 250 may be expanded upward from the content type list region 200, thereby enlarging the length of the menu screen 100. On the other hand, if the user selects the multimedia devices list region 300, a multimedia devices sub-list region 350 may be expanded downward from the multimedia devices list region 350, thereby enlarging the length of the menu screen 100. Meanwhile, without enlarging the length of the menu screen 100, the expanding direction can be inside content list 500, for example, in this case, content list 500 can be downsized.

Figure 15 is a diagram illustrating sub-menu regions expanded from the menu screen 100 of Figure 4. Referring to Figure 14, if a user selects the content type list region 200 or the multimedia devices list region 300, a sub-menu region, if any, may be expanded leftward or rightward from the content type list region 200 or the multimedia devices list region 300. In detail, if the user selects the content type list region 200, a content type sub-list region 250 may be expanded leftward from the content type list region 200, thereby enlarging the width of the menu screen 100. On the other hand, if the user selects the multimedia devices list region 300, a multimedia devices sub-list region 350 may be expanded from the multimedia devices list region 350, thereby enlarging the width of the menu screen 100.

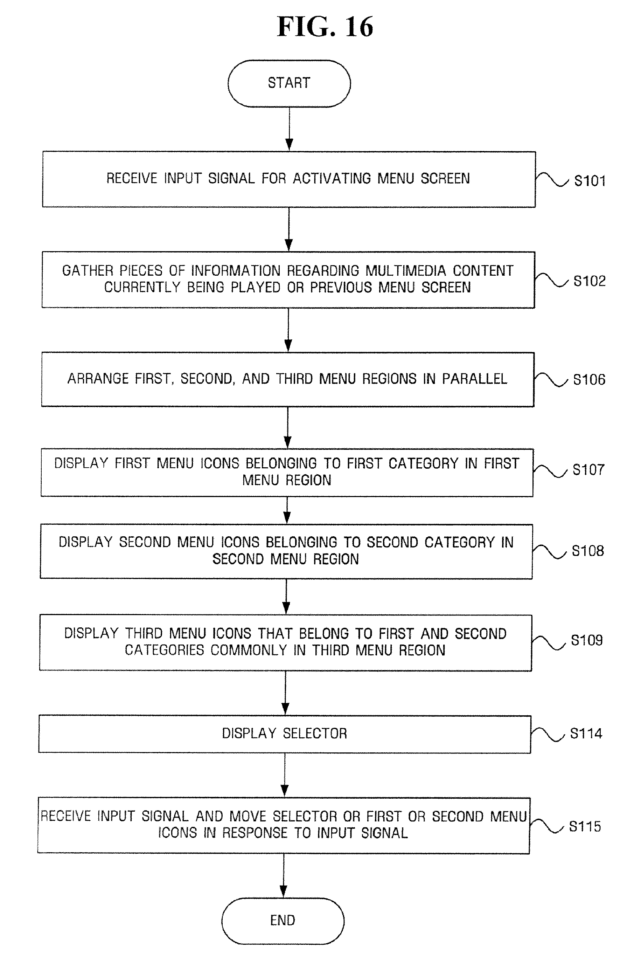

Referring to Figure 16, in operation S101, an activation input signal for activating a menu screen is received from a user. In operation S102, a multimedia device collects a plurality of pieces of information regarding multimedia content currently being played or a previous menu screen in response to the input signal. Operation S102 is an operation of gathering a plurality of pieces of information regarding prior menu screen settings. In operation S106, first, second, and third menu regions are displayed in parallel. In operations S107 and S108, a plurality of menu icons belonging to a first category are displayed in the first menu region, and a plurality of menu icons belonging to a second category are displayed in the second menu region. In operation S109, pluralities of pieces of content information that belong to the first and second categories are displayed in the third menu region. In operation S114, a selector is displayed. In operation S115, when a user hits a directional key or generates a directional input signal using a jog shuttle, the selector or the first or second menu icons are moved so that the selector can flip through the first or second menu icons displayed in the first or second menu region or the plurality of pieces of content information displayed in the third menu region or can move from one menu region to another.

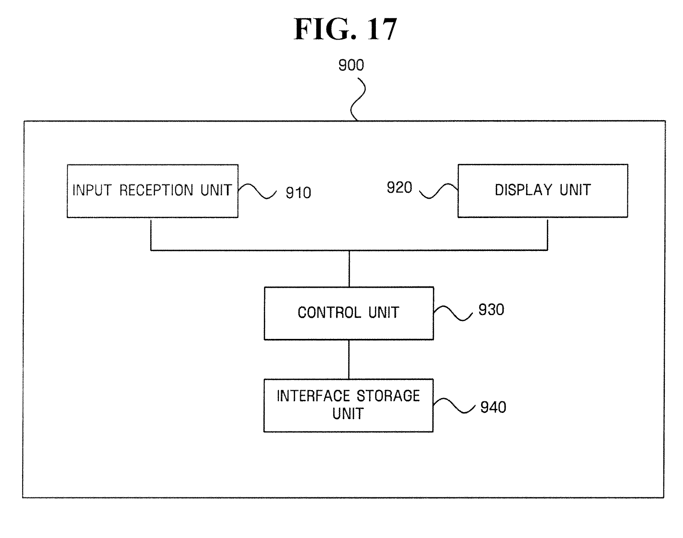

Figure 17 is a block diagram of an apparatus for displaying a user interface according to an exemplary embodiment of the present invention, which includes an input reception unit 910, a display unit 920, a control unit 930, and an interface storage unit 940.

The input reception unit 910 receives a directional input signal from a user. The input signal received by the input reception unit 910 is transmitted to the control unit 930. The control unit 930 determines what information is to be processed and then displayed based on the input signal. For example, if the input signal indicates that a left or right key has been hit on the menu screen 101 of Figure 6, a plurality of menu icons in a menu region (hereinafter referred to as the current menu region) where a selector is located may be moved to the left or to the right. On the other hand, if the input signal indicates that a down key has been hit on the menu screen 101 of Figure 6, the selector may be moved from the current menu region to a menu region below the current menu region. Therefore, the control unit 930 determines what information is to be displayed based on the input signal, generates the information to be displayed, and displays the generated information via the display unit 920. The display unit 920 may be a typical display device.

The control unit 930 may be implemented as a control circuit, a control component, programmed software or by some other instruction.

The interface storage unit 940 stores information regarding what information is to be displayed in each region on a menu screen. Therefore, the control unit 930 determines how the information stored in the interface storage unit 940 is to be displayed.

As described above, according to the present invention, it is possible to conveniently search for and reproduce content of interest in a home network.

In addition, the present invention allows a required number of user input processes to be minimized.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for displaying a user interface in which a plurality of related pieces of menu information belonging to distinct categories are displayed in parallel, the apparatus comprising:
an interface storage unit (940) which stores information regarding a plurality of first menu icons (201) belonging to a first category, information regarding a plurality of second menu icons (301) belonging to a second category, information regarding a plurality of third menu icons (501) belonging to a third category, and information regarding one of the first, second, and third menu icons (201, 301, 501) selected by a selector (701);
a display unit (920) which displays a selector (701), displays the first menu icons (201) in a first menu region (200), displays the second menu icons (301) in a second menu region (300), and displays the third menu icons (501) in a third menu region (500), the first, second, and third menu regions (200, 300, 500) being displayed in parallel;
an input reception unit (910) which receives a directional input signal or a selection input signal from a user; and
a control unit (930) which moves the first, second, and third menu icons (201, 301, 501) displayed by the display unit (920) or moves the selector (701) in response to the input signal received by the input reception unit (910) by referencing the information stored in the interface storage unit (940) and determines the third menu icons (501) displayed by the display unit (920) based on common characteristics between the first category and the second category corresponding to selected first icons and second icons.

2. The apparatus of claim 1, wherein, if the selector (701) is located in one of the first, second, and third menu regions (200, 300, 500), the control unit (930) changes the information of the menu region where the selector (701) is located in response to the directional input signal received by the input reception unit (910).

3. The apparatus of claim 2, wherein the directional input signal is used for moving the selector (701).

4. The apparatus of claim 1, 2 or 3, wherein the directional input signal is generated using one of left, right, up, and down keys, a jog shuttle, and a joystick.

5. The apparatus of any preceding claim, further comprising a plurality of selectors (701), wherein the selectors (701) are located in each of the first, second, and third menu regions (200, 300, 500) and have a directional input signal corresponding to each respective menu region.

6. The apparatus of any preceding claim, wherein the first category is a multimedia device category that lists a plurality of multimedia devices, the second category is a multimedia content type category that lists a plurality of multimedia content types, the third category is a content type category that includes a plurality of pieces of content that can be played by or stored in at least one of the multimedia devices and correspond to at least one of the multimedia content types.

7. The apparatus of any preceding claim, wherein the display unit (920) displays an input screen for selecting how to arrange the third menu icons (501) in the third menu region (500), wherein the control unit (930) determines the arrangement of the display of the third menu icons (501) based on the input signal received by the input reception unit (910).

8. The apparatus of any preceding claim, wherein, if the user selects one of the first or second menu icons (201, 301), the display unit (920) also displays a sub-menu region (250, 350) in parallel to the first or second menu region (200, 300) to which the menu icon selected by the selector (701) belongs.

9. A method of displaying a user interface in which a plurality of related pieces of menu information belonging to distinct categories are displayed in parallel, the method comprising:
receiving an activation input signal for requesting a menu screen;
displaying a plurality of first menu icons (201) belonging to a first category in a first menu region (200) and displaying a plurality of second menu icons (301) belonging to a second category in a second menu region (300);
displaying a plurality of third menu icons (501) belonging to a third category in a third menu region (500), such that the third menu icons (501) displayed correspond to a first menu icon (201) selected from a first menu region (200) and a second menu icon (301) selected from a second menu region (300);
displaying a selector (701) in at least one of the first, second, and third menu regions (200, 300, 500); and
receiving an input signal and moving the first or second menu icons (201, 301) or the selector (701) in response to the input signal so that the first menu icon (201) and the second menu icon (301) are selected.

10. The method of claim 9, wherein if the selection of the first menu icon (201) or the second menu icon (301) is changed, the third menu icons (501) displayed are changed to correspond to third menu icons (501) of the third category which have common characteristics with the currently selected first menu icon (2010) and second menu icon (301).

11. The method of claim 9 or 10, wherein the directional input signal is used for moving the selector (701).

12. The method of claim 11, wherein the directional input signal is generated using one of left, right, up, and down keys, a jog shuttle, and a joystick.

13. The method of any of claims 9 to 12, wherein, if multiple selectors (701) are displayed there are directional input signals for each of the first, second and third menu regions (200, 300, 500) displaying the selectors (701) .

14. The method of any of claims 9 to 13, wherein the first category is a multimedia devices category that includes a plurality of multimedia devices, the second category is a multimedia content type category that includes a plurality of multimedia content types, the third category is a content type category that includes a plurality of pieces of content that can be played by or stored in at least one of multimedia devices and corresponds to at least one of the multimedia content types.

15. The method of any of claims 9 to 14, further comprising:
receiving a tool button input signal; and
providing an input screen that permits selecting how to arrange the third menu icons (501) in the third menu region (500), if the tool button input signal is received.

16. The method of any of claims 9 to 15, wherein, if the selector (701) selects one of the first or second menu icons (201, 301), further comprising displaying a sub-menu region (250, 350) in parallel to the first or second menu region (200, 300) to which the menu icon selected by the selector (701) belongs.

17. A user interface for arranging a plurality of related pieces of menu information belonging to distinct categories in parallel, the user interface comprising:
a first menu region (200) in which first menu icons (201) belonging to a first category are displayed;
a second menu region (300) in which second menu icons (301) belonging to a second category are displayed;
a third menu region (500) in which at least one of a plurality of third menu icons (501) belonging to a third category are displayed, the at least one of the plurality of third menu icons (501) being displayed having common characteristics with at least one of a selected first menu icon (201) and a second menu icon (301), said third menu region (500) displayed in parallel with the first and second menu regions (200, 300); and
a selector (701) located in at least one of the first, second and third menu regions (200, 300, 500) that enables selection of at least one of the first menu icons (201), the second menu icons (301) and the third menu icons (501).

18. The user interface of claim 17, wherein if the selection of the first menu icon (201) or the second menu icon (301) is changed, the third menu icons (501) displayed are changed to correspond to third menu icons (501) of the third category which have common characteristics with the currently selected first menu icon (201) and second menu icon (301).

19. The user interface of claim 17 or 18, wherein, if the selector (701) is located in one selected region of the first, second and third menu regions (200, 300, 500), information in the selected region changes by a directional input signal.

20. The user interface of claim 19, wherein the directional input signal is used for moving the selector (701).

21. The user interface of claim 19 or 20, wherein the directional input signal is generated using one of left, right, up, and down keys, a jog shuttle, and a joystick.

22. The user interface of any of claims 17 to 21, wherein, if multiple selectors (701) are displayed there are directional input signals for each of the first, second and third menu regions (200, 300, 500) displaying the selectors (701).

23. The user interface of any of claims 17 to 22, wherein the first category is a multimedia devices category that lists a plurality of multimedia devices, the second category is a multimedia content type category that lists a plurality of multimedia content types, the third category is a content type category that includes a plurality of pieces of content that can be played by or stored in at least one of the multimedia devices and corresponds to at least one of the multimedia content types.

24. The user interface of any of claims 17 to 23, wherein the third menu region (500) provides an input screen for selecting how to arrange the third menu icons (501) in the third menu region (500).

25. The user interface of any of claims 17 to 24, wherein, if the selector (701) selects one of the first or second menu icons (201, 301), a sub-menu region (250, 350) of the selected menu icon is displayed in parallel to the first or second menu region (200, 300) to which the menu icon selected by the selector (701) belongs.

26. An apparatus for displaying a user interface, comprising:
a control unit (930) which causes a display to display first menu icons (201) of a first category, second menu icons (301) of a second category, third menu icons (501) of a third category, and a selector (701) that selects at least one of the first menu icons (201), the second menu icons (301), and the third menu icons (501),
wherein the third menu icons (501) displayed have common characteristics with the first menu icon (201) and second menu icons (301) selected.

27. The apparatus for displaying a user interface according to claim 26, further comprising:
an input reception unit (910) that receives input from a user and sends a signal corresponding to the input to the control unit (930),
wherein the control unit (930) causes the selector (701) to select at least one of the first menu icons (201) or the second menu icons (301).

28. The apparatus for displaying a user interface according to claim 26 or 27, wherein the control unit (930) causes the display to display the first menu icons (201) in a first region, the second menu icons (301) in a second region and the third menu icons (501) in a third region, wherein the first region, the second region, and the third region are displayed in parallel.

29. The apparatus for displaying a user interface according to claim 26, 27 or 28, wherein the selector (701) is displayed in a selector region and the control unit (930) causes the first menu icons (201), the second menu icons (301), and the third menu icons (501) to move through the selector region based on input from a user.
